**Europäisches Patentamt**

**European Patent Office**

**Office européen des brevets**

(19)

(11) Publication number: **0 149 560**
**B1**

(12) # EUROPEAN PATENT SPECIFICATION

(45) Date of publication of patent specification: **06.12.89**

(51) Int. Cl.⁴: **A 01 N 43/78** // (A01N43/78, 43:42)

(21) Application number: **85300307.7**

(22) Date of filing: **17.01.85**

(54) Fungicidal compositions.

(30) Priority: **18.01.84 GB 8401308**

(43) Date of publication of application:
**24.07.85 Bulletin 85/30**

(45) Publication of the grant of the patent:
**06.12.89 Bulletin 89/49**

(84) Designated Contracting States:
**DE FR GB IT**

(56) References cited:
**US-A-3 709 992**

**CHEMICAL ABSTRACTS, vol. 83, no. 7, 18th August 1975, page 137, no. 54385m, Columbus, Ohio, US; M. STEC et al.: "Comparison of the systemic fungicidal activity of 2-amino-4-methyl-5-carboxyanilidothiazole (ALF) and 2,4-dimethyl-5-carboxyanilidothiazole (ALG) in greenhouse and field tests" & ACTA PHYTOPATHOL. 1973, 8(3-4), 283-294**

**The file contains technical information submitted after the application was filed and not included in this specification**

(73) Proprietor: **UNIROYAL LIMITED**
**Cliftonhall Road**
**Newbridge Midlothian EH28 8LG Scotland (GB)**

(72) Inventor: **Bartlett, Digby H.**
**1, Hailsham Close**
**Battenhall Worcester (GB)**

(74) Representative: **Harrison, Michael Robert**
**URQUHART-DYKES & LORD 5th Floor Tower House Merrion Way**
**Leeds LS2 8PA West Yorkshire (GB)**

Courier Press, Leamington Spa, England.

**Description**

This invention is concerned with fungicidal composition, for instance fungicidal compositions, which are applied as seed dressing and intended to prevent fungal attack on seeds.

In an article in Acta Phytopathologica Academiae Scientiarum Hungarical, Vol. 8 (3-4), pages 283-294 (1973) the use of technical grade 2,4-dimethyl-5-carboxyanilidothiazole together with copper oxine in reported as a fungicidal composition for treating seeds. Large amounts of the compounds were used, 300 gram per 100 kilogram of seed to achieve control of *Ustilago nuda*. Such high levels of seed treatment are undesirable on grounds of expense and detriment to the environment.

According to the present invention there is provided a method of protecting seeds from fungus comprising adding to the seeds a synergistic amount of a fungicidal composition comprising:

(A) 2,4-dimethyl-5-carboxyanilidothiazole; and

(B) copper oxyquinolate

wherein from 10 to 80 grams of component (A) and from 5 to 50 grams of component (B) are applied to each 100 kilograms of seed.

The composition according to the invention provides a seed dressing with a wide spectrum of activity, together with enhanced or synergistic activity at least against certain fungi.

For the control of phytopathogenic fungi on seed (e.g. Calonectria nivalis, Pryenophora graminae, Tilletia caries, Ustilago avenae Septoria nodorum, Telletia foetida, Ustilago hordei, Ustilago nigra, Urocystis occulata, Pryenophora avenae, Cochliobolus savitus) materials containing mercury are mainly used. However, these materials possess the disadvantage of toxicity to warm blooded animals. Other less toxic materials are not satisfactory on account of their narrow spectrum of activity.

A composition used in the present invention in the form of a seed dressing is less toxic than mercury containing dressing and is suitable for agricultural, gardening and forestry use. The composition may include further ingredients such as other fungicides. Furthermore, the composition may be used together with one or more additional pesticidal materials such as insecticides (for instance organochlorine compounds such as Lindane, organophosphoric ester such as Diazinon, Isazofos, and Thiofanox and carbamates such as Carbofuran, Mercaptodimethar, and Bendiocarb) and repellants (such as anthraquinone, thioanthraquinone, Benathrone, Ziram and dipenylguanidine) to protect the seeds against pests such as insects and birds.

When compared with traditional mercury containing Universal seed dressings, the compositions in accordance with the present invention possess a wider spectrum of activity (e.g. control of Ustilago nuda, Ustilago tritici, Typhula incarnata, Phynchosporium secalis, Erysiphe graminis and a higher degree of activity against any other seed pathogens (e.g. Pyrenophora avenae Cochliobolus sativus].

The composition used in the present invention may include one or more carrier materials such as the minerals talc, kaolin, bentonite and barytes, stickers such as Spindeloil, ethylene glycol and polyvinylacetate. A composition may include pigments such as iron oxide and Rubin Toner.

A composition in accordance with the present invention in the form of a powder may be formulated by mixing together all the dry materials, including the carrier and additives until a homogenous mixture is formed. The stickers are then added and the whole mixed again until the mixture becomes homogenous.

In the case of a liquid formulation, organic solvents such as xylene, dimethyl formamide, ethylene glycol and methanol and cyclohexane are used as diluting agents and mixed together with surface active agents (Calcium Dodecylbenzenesulphonate, polyglycolether and Arylpolyether alcohols) as well as a dye (e.g. Rhodamine and methylviolet).

Preferably the weight ratio of compound A to copper oxyquinolate is from 1.25 to 7.5 or preferably from 1.25 to 3.75.

A composition in accordance with the present invention is preferably applied to seed such that the amounts of the active compound applied per 100 kg. of seed is as follows:

| | |
|---|---|
| Copper oxyquinolate | from 5 to 80 g a.i. |
| Compound A | from 10 to 80 g a.i. |
| More preferably the amounts are as follows: | |
| Copper oxyquinolate | from 5 to 35 g a.i. |
| Compound A | from 35 to 50 g a.i. |
| a.i. is active ingredient | |

Compositions in accordance with the present invention may be applied to the seeds of, for instance, rye, wheat, barley and oats.

The present invention provides a method of protecting seeds against fungi, the method comprising applying to the seeds a composition in accordance with the invention.

An example of the invention will now be described, the seed treatment method being carried out in accordance with the BBA guidelines 4-1.1 (March 1974) Ehle, H.l Frohbeyer, P.E., Reinhard, H. and Roder, K. (1974), "Preliminary guidelines for the testing of seed dressings against cereal diseases," March 1974, published by BBA, Messeweg 11/12, 3300 Braunschweig. In this example Compound I is 2,4-dimethyl-5-carboxanilidothiazole.

# EP 0 149 560 B1

## Example

Spring wheat cv. Timmo was artificially infected with dry spores of Tilletia caries at a rate of 2g of spores per kg of wheat seed. The innoculate seed was treated with the seed treatments at various rates. These wettable powder formulations were diluted with water and applied to the seed by spraying a fine mist of liquid seed treatment using a de Vilbiss [trademark] compressed air powered spray gun, on to a measured quantity of seed and shaking the seed and chemical in a bottle for 5 minutes.

All formulations in addition to active ingredient contained wetting and dispersing agents, pigments, kaolin and white oil.

All formulations were diluted with water to keep a constant rate of application volume of 400 ml/100kg seed.

The seed was drilled into open ground, on a clay loam soil type, using a tractor mounted Oyjord Seed Drill. Plot size was 1.6m × 5 m with four replications, all treatments were fully randomized.

Assessment of disease was carried out by taking 100 randomly selected heads per plot and examining for disease thus establishing the infection level. Compositions and results are summarized in Table 1.

Results show the enhanced effectiveness of Compound A when it is used in a mixture with copper oxyquinolate, particularly when Compound A is used at the lower of the two concentrations. The results obtained with formulations 9, 10 and 11 were analysed by comparing them with the results obtained by the use of Compound A or copper oxyquinolate alone and the theoretical percentage control by a mixture of Compound A and copper oxyquinolate was calculated.

It can be seen that the presence of copper oxyquinolate gives a synergistic enhancement to the effectiveness of Compound A, the degree of enhancement being of great significance having regard to the requirements in many countries for control which is either 100% effective or very close to 100% effective.

## G696 Synergy Results

| | G696 Observed Control (mean %) $X^2$ | Additive Observed Control (mean %) $Y^2$ | Calculated % Control[1] $E_t^3$ |
|---|---|---|---|
| IMAZ | 95.7 | 12.5 | 96.2375*[4] |
| | 95.7 | 0 | 95.7* |
| | 95.7 | 16.75 | 96.42025* |
| | 63.7 | 12.5 | 68.2375* |
| | 63.7 | 0 | 63.7* |
| | 63.7 | 16.75 | 69.78025* |
| PROCHLORAZ | 95.7 | 50.9 | 97.8887 |
| | 95.7 | 70.2 | 98.7186 |
| | 95.7 | 80.8 | 99.1774 |
| | 63.7 | 50.9 | 82.1767* |
| | 63.7 | 70.2 | 89.1826 |
| | 63.7 | 80.8 | 93.0304 |
| TBZ | 95.7 | 6.6 | 95.9838 |
| | 95.7 | 12.5 | 96.2375 |
| | 95.7 | 44.5 | 97.6135 |
| | 63.7 | 6.6 | 66.0958* |
| | 63.7 | 12.5 | 68.2375 |
| | 63.7 | 44.5 | 79.8535* |

# EP 0 149 560 B1

## G696 Synergy Results

| | G696 Observed Control (mean %) $X^2$ | Additive Observed Control (mean %) $Y^2$ | Calculated % Control[1] $E_t^3$ |
|---|---|---|---|
| CGA G4251 | 95.7 | 74.4 | 98.8992* |
| | 95.7 | 93.6 | 99.7248001 |
| | 95.7 | 97.85 | 99.90755 |
| | 63.7 | 74.4 | 90.7072* |
| | 63.7 | 93.6 | 97.6768* |
| | 63.7 | 97.85 | 99.21955* |
| CuOxy | 95.7 | 65.85 | 98.53155* |
| | 95.7 | 74.4 | 98.8992 |
| | 95.7 | 80.8 | 99.1744* |
| | 63.7 | 65.85 | 87.60355* |
| | 63.7 | 74.4 | 90.7072* |
| | 63.7 | 80.8 | 93.0304* |

1. Based on observed mean % of individual components of mixture.
2. X and Y are from means for two tests.

3. $E_t = X + Y - \left(\dfrac{XY}{100}\right)$

4. * = synergy

## TABLE 1

| Formulation (4) | 1 | 2 | 3 | 4 | 5 | 6 | 7 | 8 | 9 | 10 | 11 |
|---|---|---|---|---|---|---|---|---|---|---|---|
| Compound A, g | 75 | 37.5 | — | — | — | 75 | 75 | 75 | 37.5 | 37.5 | 37.5 |
| CuOQ[1], g | — | — | 10 | 20 | 30 | 10 | 20 | 30 | 10 | 20 | 30 |
| Control % [2] | 95.7 | 63.7 | 65.9 | 74.4 | 80.8 | 100 | 97.9 | 100 | 100 | 95.7 | 95.7 |
| Theoretical [3] Control % | — | — | — | — | — | 98.5 | 98.9 | 99.2 | 87.6 | 90.7 | 93.0 |
| I/CuOQ[5] | — | — | — | — | — | 7.5 | 3.75 | 2.5 | 3.75 | 1.875 | 1.25 |

REMARKS
(1) Copper Oxyquinolate
(2) Observed Mean % control for 2 field trials.
(3) From Cloby Formula
(4) Untreated control Mean % infected 47.5%
(5) Weight ratio

## Claims

1. A method of protecting seeds from fungus comprising adding to the seeds a synergistic amount of a fungicidal composition comprising:
   (A) 2,4-dimethyl-5-carboxyanilidothiazole; and

(B) copper oxyquinolate
wherein from 10 to 80 grams of component (A) and from 5 to 50 grams of component (B) are applied to each 100 kilograms of seed.

2. A method in accordance with claim 1 wherein from 35 to 50 grams of component (A) and from 5 to 35 grams of component (B) are applied to each 100 kilograms of seed.

3. A method of protecting seeds from fungus comprising adding to the seeds a synergistic amount of a fungicidal composition comprising:

(A) 2,4-dimethyl-5-carboxyanilidothiazole; and

(B) copper oxyquinolate
wherein from 5 to 35 grams of component (A) and from 10 to 80 grams of component (B) are applied to each 100 kilograms of seed.

4. A method in accordance with claims 1, 2 or 3 wherein said seed is selected from the group of wheat or barley.

**Patentansprüche**

1. Verfahren zum Schützen von Saatgut vor Pilzen, bei dem eine synergistische Menge einer fungiziden Mischung, die

(A) 2,4-Dimethyl-5-carboxyanilidothiazol und

(B) Kupferoxychinolat
enthält, zu dem Saatgut zugegeben wird, wobei 10 bis 80 Gramm des Bestandteils (A) und 5 bis 50 Gramm des Bestandteils (B) auf je 100 Kilogramm des Saatgutes angewendet werden.

2. Verfahren nach Anspruch 1, wobei 35 bis 50 Gramm des Bestandteils (A) und 5 bis 35 Gramm des Bestandteils (B) auf je 100 Kilogramm des Saatgutes angewendet werden.

3. Verfahren zum Schützen von Saatgut vor Pilzen, bei dem eine synergistische Menge einer fungiziden Mischung, die

(A) 2,4-Dimethyl-5-carboxyanilidothiazol und

(B) Kupferoxychinolat
enthält, zu dem Saatgut zugegeben wird, wobei 5 bis 35 Gramm des Bestandteils (A) und 10 bis 80 Gramm des Bestandteils (B) auf je 100 Kilogramm des Saatgutes angewendet werden.

4. Verfahren nach Anspruch 1, 2 oder 3, wobei das Saatgut aus der Gruppe des Weizens oder der Gerste ausgewählt wird.

**Revendications**

1. Procédé pour protéger les semences des champignons consistant à ajouter aux semences une quantité synergique d'une composition fongicide comprenant:

(A) 2,4-diméthyl-5-carboxyanilidothiazole; et

(B) oxyquinolate de cuivre
où de 10 à 80 grammes du constituant (A) et de 5 à 50 grammes du constituant (B) sont appliqués à chaque 100 kilogrammes de semence.

2. Procédé selon la revendication 1, où de 35 à 50 grammes du constituant (A) et de 5 à 35 grammes du constituant (B) sont appliqués à chaque 100 kilogrammes de semence.

3. Procédé pour protéger les semences des champignons consistant à ajouter aux semences une quantité synergique d'une composition fongicide comprenant:

(A) 2,4-diméthyl-5-carboxyanilidothiazole; et

(B) oxyquinolate de cuivre
où de 5 à 35 grammes du constituant (A) et de 10 à 80 grammes du constituant (B) sont appliqués à chaque 100 kilogrammes de semence.

4. Procédé selon la revendication 1, 2 ou 3, où ladite semence est choisie dans le groupe consistant en blé ou orge.